# FASCICULE DE BREVET EUROPEEN

(11) **EP 0 433 153 B1**
(45) Date de publication et mention de la délivrance du brevet: **05.04.1995**
(21) Numéro de dépôt: 90403511.0
(22) Date de dépôt: 10.12.1990
(51) Int. Cl.: H04M 11/00

(54) **Terminal de télécommunication et de gestion connectable au réseau téléphonique et appareil d'appel automatique d'un tel terminal**
Mit einem Fernsprechnetz verbindbares Endgerät zur Fernmeldung und Verwaltung und Apparat zur automatischen Wahl für ein solches Endgerät
Telecommunication and management terminal connectable to the telephone network and an automatic calling device for such a terminal

(30) Priorité: 11.12.1989 FR 8916340
(43) Date de publication de la demande: 19.06.1991
(73) Titulaire: ELECTRICITE DE FRANCE Service National, 75008 Paris (FR)
(72) Inventeur: Guichard, Jean-Pierre, F-75015 Paris (FR)
(74) Mandataire: Fort, Jacques

(56) Documents cités:
- GB-A- 2 099 260
- GB-A- 2 105 950
- GB-A- 2 178 928
- US-A- 3 922 492

## Description

L'invention a pour objet un terminal de télécommunication et de gestion permettant l'utilisation en alternance d'au moins une ligne téléphonique de réseau public pour des communications vocales vers et à partir d'au moins un poste téléphonique local et pour des transferts de données.

On a déjà proposé des terminaux répondant aux fonctions ci-dessus. On peut notamment citer à titre d'exemples ceux qui sont décrits dans le document FR-A-2 500 242 et dans l'article "Sophisticated Services on Simple Copper Pair" (Telephony, 13 août 1973, pp. 60-66), auxquels on pourra se reporter. Ces terminaux exigent en général de juxtaposer plusieurs ensembles distincts affectés à des fonctions différentes, telles que commutation téléphonique, traitement informatique de données, sélection, commande. Ils sont en conséquence complexes et coûteux, difficilement acceptables pour des installations d'abonnés privés ou des installations semi-professionnelles.

On a également proposé (FR-A-2 631 765) un circuit d'interface téléphonique fonctionnant sur le courant de ligne, permettant d'inhiber la sonnerie d'un poste téléphonique qu'il équipe et d'orienter un appel entrant soit vers un générateur sonore, soit (en cas de présence d'un numéro d'appel complémentaire) vers un terminal. Le fonctionnement est mis en défaut si l'abonné décroche pour appeler.

L'invention vise à fournir un terminal remplissant au minimum les fonctions de communication téléphonique et de télérelevé de compteur local ayant une constitution simple, donc économique, du fait que ses éléments essentiels sont de nature comparable à celle d'un autocommutateur de très faible capacité, (dit micro-commutateur) répondant à la spécification technique ST/PA/TPA/CRE/1783 de juillet 1988 du Centre National d'Etudes des Télécommunications, évitant toute sollicitation intempestive d'un poste téléphonique d'abonné à réception d'un appel qui n'est pas destiné à ce poste et évitant qu'un décrochage du poste d'abonné ne pertube la mise en liaison avec un autre organe.

Un tel terminal suivant l'invention comporte un autocommutateur électronique ayant au moins une unité de ligne connectable à une ligne de réseau et des joncteurs de lignes intérieures de liaison avec au moins un poste local d'abonné, il comprend : des moyens réagissant à tout train d'appel entrant pour décrocher la ligne et envoyer en retour un message vocal d'interrogation, de durée déterminée ; et des moyens pour reconnaître au moins un code d'accès prédéterminé entrant pendant ladite durée déterminée et pour orienter l'appel vers le poste local en provoquant la sonnerie locale en cas d'absence de code d'accès reconnu, vers un autre périphérique de communication tel qu'un générateur d'émission de données de comptage en cas de reconnaissance du code d'accès prédéterminé propre au dit autre périphérique.

L'invention trouve une application particulièrement importante mais nullement exclusive dans la constitution de terminaux permettant le télérelevé de compteurs de consommation d'énergie (notamment d'électricité ou de gaz). Dans ce cas, le terminal comporte un boîtier scellable d'interface avec les compteurs, mémorisant ou transposant les informations fournies par les compteurs et interdisant toute intervention non autorisée.

Bien qu'un tel terminal soit utilisable avec tout appareil d'abonné local à numérotation décimale ou multifréquence, l'utilisation complète des possibilités de l'invention implique l'utilisation de la numérotation dite "multifréquence", ou DTMF suivant la norme Q23, avec clavier à douze touches ou à seize touches (0 à 9, *, #, A, B, C, D); le code d'accès est alors constitué par des chiffres ou lettres d'appel, au nombre de six par exemple, s'ajoutant au numéro d'appel du terminal sur le réseau public. Les appareils téléphoniques d'abonné local peuvent évidemment comporter des fonctions supplémentaires telles que écoute amplifiée, prise de ligne sans décrochage, mémorisation de numéros d'appel, etc... Il est également avantageux de munir le terminal d'un équipement de liaison sans fil avec des postes d'utilisateur, utilisant par exemple la modulation d'une diffusion en infra-rouge.

Dans un mode représentatif de mise en oeuvre de l'invention, le terminal est prévu pour réagir à tout appel entrant en : décrochant pour prendre la ligne, émettant la tonalité modem à 2100 Hz d'excitation d'un système éventuel d'appel automatique ; et émettant ultérieurement un message vocal d'une durée suffisante pour permettre la réception d'un code d'accès (10 s par exemple).

Le terminal peut notamment être conçu de façon à admettre plusieurs codes d'accès répartis en deux groupes :
- un groupe constitué de codes d'accès programmables par l'utilisateur et lui permettant d'accéder en particulier à des fonctions de télé-alarme et/ou de télécommande, depuis un poste téléphonique ou un terminal de vidéotex, par l'intermédiaire du réseau commuté ou par voie interne ;
- un groupe de codes d'accès imposés par des prestataires de service ou des fournisseurs, permettant la télégestion de comptages de toute nature, permettant d'orienter l'appel entrant vers des mémoires protégées dans lesquelles sont stockées les données fournies par les compteurs à relever.

Les codes d'accés programmables ou paramètrables par l'utilisateur local font partie de données de gestion modifiables par l'un quelconque des procédés couramment utilisés, tels que manoeuvre manuelle d'interrupteurs, ou de cavaliers ou échange de données avec un périphérique d'entrée-sortie, tel qu'un terminal vidéotex.

Dans tous les cas, un poste téléphonique d'abonné relié au terminal n'est "sonné" que par les appels qui lui sont destinés et aucun pupitre d'opérateur n'est nécessaire.

Les équipements de saisie et de mémorisation seront inclus dans un boîtier scellé pour éviter les fraudes.

L'invention sera mieux comprise à la lecture de la description qui suit d'un mode particulier de réalisation, donné à titre d'exemple non limitatif. La description se réfère aux dessins qui l'accompagnent, dans lesquels :
- la Figure 1 est un schéma synoptique de principe d'un terminal suivant l'invention, comportant uniquement quelques unes des fonctions qu'il est possible de remplir ;
- les figures 2a et 2b ; 3 ; 4a et 4b sont des logigrammes illustrant respectivement le traitement des appels entrants, le traitement des alarmes et la télésurveillance du secteur d'alimentation électrique.
- la figure 5 est un diagramme de principe des échanges lors du télérelevé de compteurs.

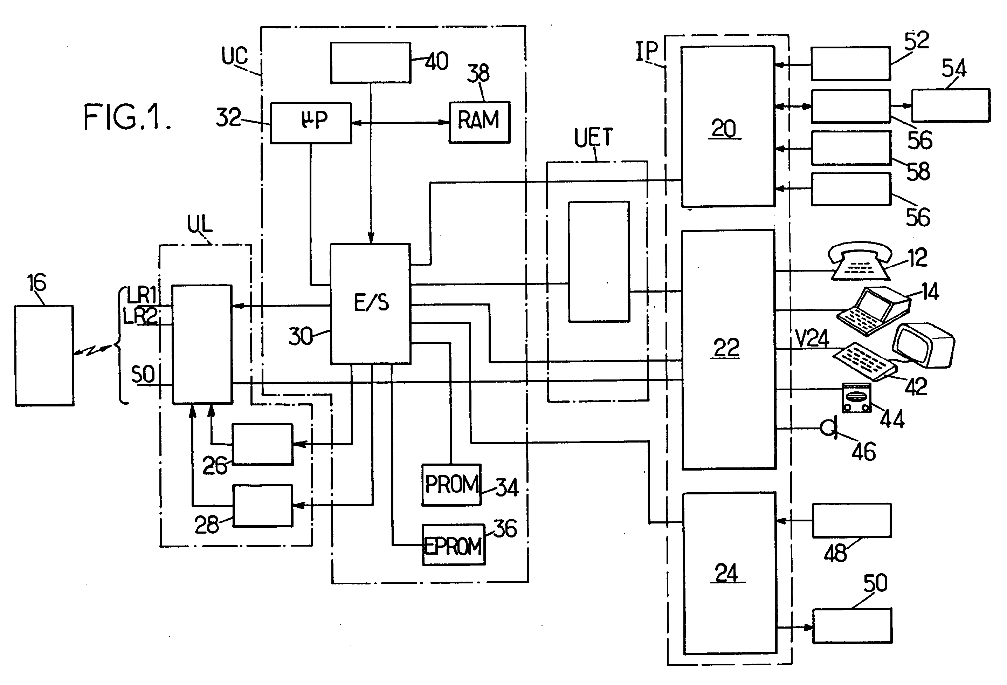

Le terminal 10 dont la constitution de principe est montrée en Figure 1 comporte les caractéristiques générales d'un autocommutateur de petite capacité, à utilisation résidentielle ou semi-professionnelle. Il ne comporte pas de pupitre opérateur. Les commandes internes sont effectuées à partir de postes téléphoniques locaux 12 ou d'un terminal vidéotex 14. Les postes 12 peuvent être des postes simples de type S 63 ou T 83, à clavier douze ou seize touches, et à code d'appel multifréquence, à double tonalité dit DTMF, ou des postes évolués à intelligence propre tels que ceux disponibles dans le commerce. Il serait également possible de prévoir des postes à numérotation décimale, mais avec des restrictions d'exploitation.

Pour cela, le terminal comprend des joncteurs de ligne intérieure destinés au raccordement avec les postes locaux 12. Des communications téléphoniques et d'autres fonctions peuvent également être remplies par des appels, par l'intermédiaire du réseau téléphonique, à partir de postes d'abonné ou d'appareils 16 d'appel automatique, et le terminal comporte en conséquence des joncteurs analogiques de lignes extérieures LR1 et LR2 du réseau commuté et, éventuellement, une interface S0 (2B + D) destinée à être connectée au réseau NUMERIS.

Le terminal représenté à titre d'exemple en figure 1 peut être regardé comme ayant plusieurs sous-ensembles qui seront successivement décrits :
- une unité de ligne UL, comportant les joncteurs avec les lignes du réseau commuté et avec le réseau NUMERIS (réseau numérique à intégration de services) ;
- une unité centrale de commande UC ;
- une unité d'exploitation téléphonique UET ;
- un jeu d'interfaces périphériques IP qui, dans le cas illustré sur la figure 1, comprend des interfaces de gestion 20, un réseau de connexion téléphonique 22 incluant les joncteurs de lignes intérieures et un réseau 24 de connexion audio-vidéo.

En plus de ces sous-ensembles, le terminal est muni d'un circuit d'alimentation fournissant les tensions requises aux différents composants. Certaines des fonctions qui seront décrites par la suite ne peuvent être remplies que si l'alimentation électrique comporte des moyens de sauvegarde, constitués par exemple par une batterie et un convertisseur fournissant les tensions d'utilisation nécessaires, mis automatiquement en service en cas de défaillance de l'alimentation à partir du secteur.

Si aucune sauvegarde n'est prévue, le terminal doit comporter un programme de réinitialisation et de reprise du service après interruption de l'alimentation.

On décrira maintenant une constitution possible des divers sous-ensembles, qui n'est donnée qu'à titre d'exemple. En particulier, certaines des fonctions à remplir peuvent être incorporées à un sous-ensemble autre que celui dans lequel elles sont représentées sur la figure 1 et certaines des fonctions peuvent être omises.

L'unité de ligne UL peut avoir une constitution classique, permettant le traitement des appels entrants et sortant sur demande des postes intérieurs. Elle comporte les joncteurs analogiques de lignes extérieures et éventuellement un joncteur du réseau NUMERIS. Pour autoriser certaines fonctions, cette unité de ligne comporte un modem autorisant par exemple la transmission de caractères alpha-numériques ou semi-graphiques. L'unité de ligne représentée comprend de plus un numéroteur automatique 26 et un convertisseur 28 de message de sortie, permettant de transformer en indication vocale un message mémorisé sous forme numérique.

L'unité centrale UC comprend des registres d'entrée-sortie 30 reliés à l'unité de ligne UL, assurant les transferts des différentes communications vers et à partir du réseau public. A ces registres d'entrée-sortie est relié un micro-processeur 32 assurant la gestion du terminal suivant des programmes de base stockés dans une mémoire morte 34, éventuellement programmable. Les paramètres susceptibles d'être modifiés par l'utilisateur sont contenus dans une mémoire reprogrammable 36, qui peut être une mémoire vive ou une mémoire morte électriquement programmable, cette dernière solution évitant de devoir reprogrammer le terminal en cas de coupure d'alimentation. La mémoire reprogrammable 36 est prévue pour n'être accessible en écriture qu'avec un mot de passe et/ou uniquement depuis un poste intérieur, afin d'éviter une modification intempestive ou malveillante de paramètres tels que les mots de code. Au micro-processeur est reliée une mémoire vive de travail 38. Enfin l'unité centrale représentée comprend une mémoire de compteurs 40, constituée par des registres qui ne peuvent être qu'incrémentés, de façon à limiter les risques de fraudes et qui contiennent des données de comptage fournies par l'intermédiaire des registres d'entrée-sortie 30 ou par l'intermédiaire de moyens de couplage spécialisés. Ils sont contenus, ainsi que les compteurs 40, dans un boîtier scellé ou scellable interdisant l'accès non autorisé.

L'unité d'exploitation téléphonique UET contient les circuits ayant des fonctions proprement téléphoniques, tels que les générateurs multifréquence fournissant les tonalités basses et hautes (fréquences basses allant de 697 à 941 Hz et fréquences hautes allant de 1209 à 1633 Hz) dont les combinaisons par paires permettent la numérotation, les récepteurs de reconnaissance des fréquences d'appels, un générateur des tonalités requises pour le fonctionnement (habituellement 330 Hz, 440 Hz et 2100 Hz) et éventuellement un modem, se substituant à celui de l'unité de ligne.

Le jeu d'interfaces périphériques IP assure la liaison avec les organes de l'installation intérieure qui comprennent au moins les postes téléphoniques 12 et des compteurs de consommation d'énergie 52.

La liaison avec les postes téléphoniques internes est réalisée par le réseau de connexion téléphonique 22 dont la constitution peut être de type connu. Tel qu'il est représenté, ce réseau est prévu pour autoriser également l'emploi d'un terminal vidéotex 14, d'un micro-ordinateur 42 par l'intermédiaire d'une liaison V24, d'un interphone portier 44 et d'un microphone 46 de surveillance des bruits ambiants, dont le rôle en téléalarme sera expliqué plus loin.

Le réseau 24 de connexion audio-vidéo est destiné à assurer la liaison avec des entrées 48 et des sorties 50 provenant d'organes tels que les réseaux câblés, des moniteurs de télévision, une installation haute fidélité, etc...

Les interfaces de gestion 20 sont destinées à assurer la liaison avec des organes assurant des fonctions qui ne sont pas proprement téléphoniques. L'une de ces applications est constituée par la lecture des indications fournies par des compteurs de consommation d'énergie ou d'autres prestations 22. L'interface est alors prévue pour incrémenter les registres 40 périodiquement, en fonction des indications données par les compteurs.

Les interfaces 20 peuvent également assurer la liaison entre le terminal constituant auto-commutateur et les interrupteurs 54 d'un tableau de distribution électrique. Dans ce cas, un coupleur 56 d'isolement galvanique est avantageusement prévu pour séparer la partie courants forts de la partie courants faibles. La liaison entre l'interface 20 et le coupleur 56 peut alors être effectué sur une paire téléphonique.

Le coupleur 56 peut évidemment être incorporé aux interfaces 20, qui sont alors reliés à l'auto-commutateur proprement dit par des paires téléphoniques et reliés aux organes périphériques par des conducteurs électriques. On a encore représenté, sur la figure 1, à titre d'exemple, des contacts d'alarme 56 et un détecteur 58 de coupure de l'alimentation électrique à partir du réseau.

L'appareil d'appel automatique 16 peut avoir une constitution générale classique, sous réserve qu'elle soit conforme aux prescriptions de l'exploitant du réseau public auquel il est raccordé. Il peut dériver de l'équipement d'appel automatique et de diffusion de message SAMSYS commercialisé par la société ACSYS. Il comportera en général : une unité centrale ayant un micro-ordinateur de type industriel ; une mémoire organisée en fichier d'abonnés et fournissant, pour chaque abonné, le numéro d'appel sur le réseau public et le code d'accès en lecture des compteurs ; et des moyens d'enregistrement et de restitution des données relevées.

Plusieurs solutions sont envisageables pour le transfert des informations de comptage depuis un terminal. L'appareil d'appel et les terminaux peuvent être prévus pour recevoir et fournir les données de comptage en code Q23, en utilisant un mode de transfert d'informations similaire à celui des numéros d'appel et des codes d'accès, en multifréquence double tonalité. Cette solution est la plus simple.

Il est également possible de prévoir une transmission utilisant un modem dans l'appareil d'appel et un modem dans chaque terminal, ce qui permet une transmission plus rapide.

Dans un autre mode de réalisation encore, l'appareil d'appel est prévu pour pouvoir traiter aussi bien des transferts d'information en code Q23 que des transferts par l'intermédiaire d'un modem, aux cadences habituelles utilisées pour le vidéotex.

L'appareil d'appel doit encore comporter les moyens permettant la mise en liaison (hand-shaking) entre l'appareil d'appel et le terminal.

Il n'est pas nécessaire de décrire en détail des circuits susceptibles d'être incorporés dans le terminal, car ces circuits, lorsqu'on les considère individuellement, peuvent avoir une constitution classique, découlant de l'organigramme à mettre en oeuvre. Les organigrammes d'une part de fonctions téléphoniques représentatives, d'autre part de fonctions annexes également représentatives seront seuls donnés.

### FONCTIONS TELEPHONIQUES SUR APPEL ENTRANT

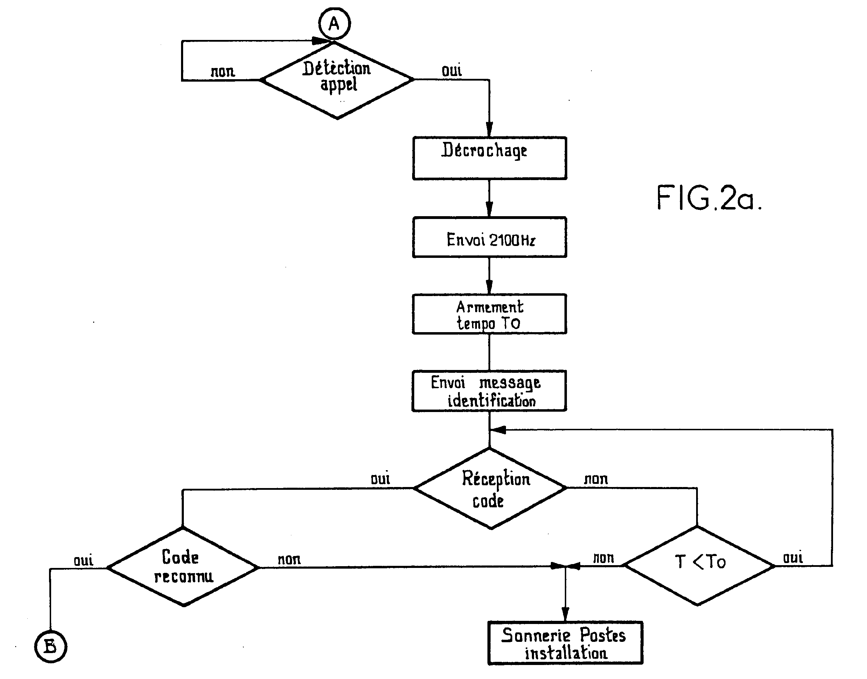

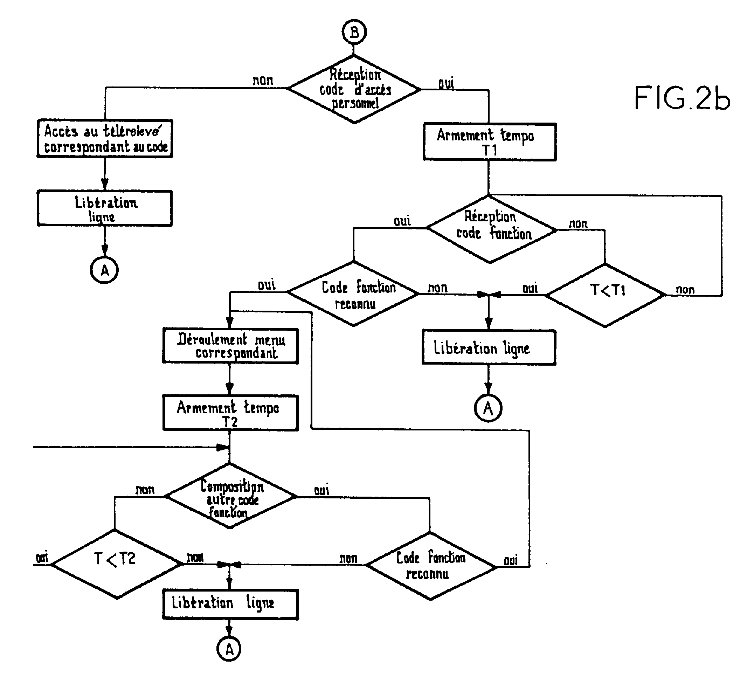

L'organigramme montré en figures 2a et 2b est celui du traitement d'un appel destiné à établir une communication soit vocale avec un poste téléphonique raccordé au terminal, soit de transmission avec un périphérique. Il respecte les spécifications techniques du document CNET "Réponse automatique" ST/PA/TPA/HGA/1 764.

Le début A de l'organigramme correspond à l'état de repos. L'unité de ligne UL du dispositif réagit à toute signalisation d'appel sur une ligne extérieure LR1 ou LR2, c'est-à-dire au premier train de sonnerie en fonctionnement analogique, par un décrochage immédiat. L'unité de ligne envoie alors, un signal à 2 100 Hz, pendant une durée qui est suffisante pour faire réagir un système d'appel automatique, si l'appel a pour origine un tel système, mais aussi courte que possible pour limiter l'attente en cas d'appel par un abonné ordinaire. Pratiquement, la durée d'émission du signal à 2 100 Hz sera d'au plus une seconde.

Une période supplémentaire T0, qui en pratique ne doit pas dépasser 10 secondes, est consacrée à l'envoi d'un message vocal d'avertissement et à la réception éventuelle d'un code d'accès multifréquence provenant de l'abonné ou du système d'appel éloigné. Sur l'organigramme de la figure 2a, cette étape correspond à l'armement d'une temporisation de durée T0 et à l'envoi d'un message d'identification et d'interrogation. Ce message doit être de type vocal pour être compréhensible par un abonné physique appelant. Il est par exemple de la forme :
"Ici ABPQMCDU ne quittez pas".

Plusieurs cas peuvent alors se présenter.

En l'absence de réception d'un code numérique l'appel est orienté vers les sonneries des postes téléphoniques 12 à l'issue de la durée de temporisation T0. Le fonctionnement est alors celui d'un micro-commutateur normal.

Il en est de même si un code est reçu, mais qu'il n'est pas reconnu comme un code d'accès.

Si par contre un code est reçu pendant la durée T0 et identifié comme un code d'accès le traitement de l'appel se poursuit comme illustré sur la figure 2b.

Si le code n'est pas reconnu comme étant le code personnel d'accès à un des périphériques de fonction, l'appel est orienté vers le périphérique de télérelevé correspondant, relié au micro-commutateur, qui correspond au code. A l'issue de la communication éventuelle, la ligne de réseau est libérée et le terminal revient dans l'état de repos A.

Si au contraire le code d'accès personnel est reconnu, il y a armement d'une temporisation de durée T1, suffisante pour autoriser la réception éventuelle d'un code de fonction formé au clavier par le correspondant. Si un tel code est transmis et est reconnu comme étant l'un des codes affecté à une fonction déterminée, par exemple le code (A) (B) (1) (3) (5) (7), il y a déroulement du menu correspondant.

A l'issue de ce déroulement, une autre temporisation, de durée T2, est armée dans l'attente d'un autre code de fonction (ou avec avertissement du correspondant éloigné qu'il peut composer un nouveau code de fonction). Le processus se répète si un nouveau code de fonction est reconnu pendant la durée T2.

A l'issue de l'exécution de toutes les fonctions, la ligne est libérée au bout de l'intervalle T2.

### FONCTION DE TELERELEVE

Le télérelevé des compteurs peut être regardé comme appartenant aux fonctions téléphoniques sur appel entrant, car il n'y a pas échange d'informations par les interfaces de gestion, qui périodiquement remettent à jour les registres de comptage irréversibles 40.

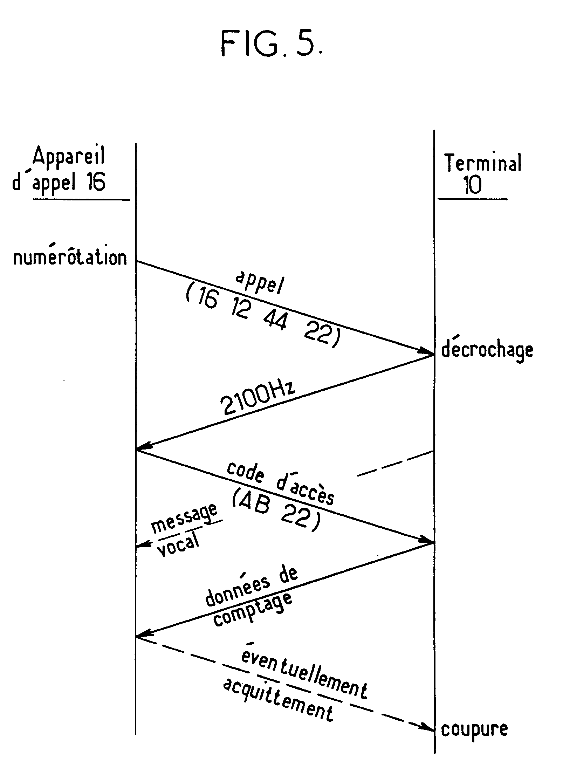

Le composeur automatique de numéro de l'appareil d'appel 16 prend une ligne du réseau public et forme le numéro d'appel du terminal 10 à appeler, indiqué sous la forme (16 12 44 22) sur la figure 5. Si l'une des lignes de réseau LR du terminal 10 appelé est libre, il y a décrochage et émission d'une tonalité à 2 100 Hz, pendant une durée qui ne dépasse pas une seconde. La transmission du code d'accès, par exemple sous la forme (AB22), propre au terminal et à la fonction "télérelevé" du terminal appelé s'effectue en même temps que l'émission d'un message vocal par le terminal. Ce fonctionnement simultané est sans inconvénient, les circuits de discrimination en fréquence de l'unité UET étant toujours capables de déceler, en présence d'une conversation téléphonique, la présence d'une fréquence du groupe bas ou du groupe haut et de l'identifier.

Dès qu'il a identifié le code d'accès le micro-processeur 32 provoque l'émission, par l'intermédiaire des registres d'entrée-sortie 30 et de l'unité de ligne UL, des données de comptage requises, généralement en code Q23.

Il est possible de prévoir un message d'acquittement provoquant la coupure par le terminal 10 ou simplement une absence de réponse qui provoque la coupure au bout du délai déterminé.

### FONCTION DE TELEALARME

La fonction de téléalarme fait intervenir les interfaces de gestion 20. Elle est représentative de fonctions de type domotique, améliorant la sécurité du site où est installé le terminal. La téléalarme implique la surveillance de contacts, désignés par 56 sur la figure 1, et la transmission d'un message d'alarme vers des postes téléphoniques raccordés au terminal et/ou vers des abonnés du réseau commuté dont les numéros sont programmés à l'avance.

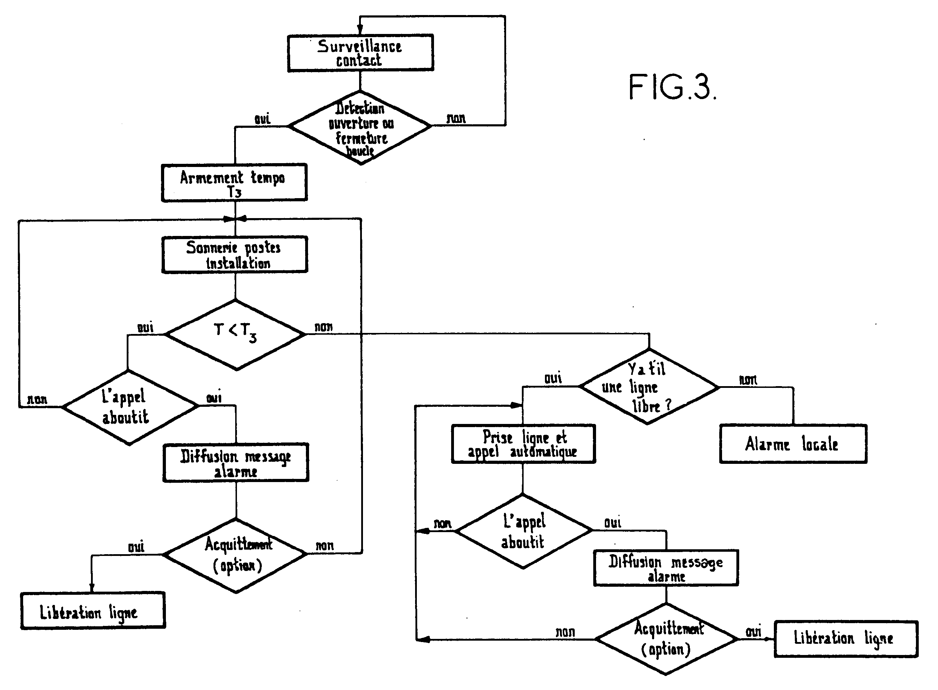

L'organigramme du traitement de signaux d'alarme, tels que l'ouverture ou la fermeture d'un contact, peut être celui schématisé en figure 3 à titre d'exemple.

Par scrutation périodique de l'état des contacts, on détermine le passage en position anormale (ouverte ou fermée) de chaque contact. Toute détection d'anomalie provoque l'armement d'une temporisation de durée T3 et l'envoi immédiat d'un signal de sonnerie vers les postes de l'installation locale (postes téléphoniques 12 raccordés aux joncteurs du micro-commutateur).

Si l'appel aboutit pendant la durée T3, il y a diffusion sur le poste local décroché d'un message d'alarme. Un acquittement par l'abonné local peut être prévu préalablement à la libération de la ligne intérieure.

En cas de défaut d'aboutissement de l'appel, ce dernier est renouvelé jusqu'à expiration de la durée T3.

Si aucun appel local n'a abouti à l'issue de T3, il y a recherche d'une ligne téléphonique extérieure L1 ou L2 libre. Si aucune ligne n'est libre, une alarme sonore ou visuelle est déclenchée. Dans le cas contraire, il y a déroulement de la procédure de prise d'une ligne et d'appel automatique d'un numéro préalablement choisi et mémorisé. Si l'appel aboutit, un message d'alarme est diffusé. Dans le cas contraire, il y a renouvelement de la procédure de la prise de ligne et d'appel automatique avec appel successif de plusieurs numéros, suivant un cycle déterminé. Un acquittement peut encore être prévu en option avec libération de la ligne.

Dans le cas envisagé plus haut d'un terminal comportant cinq postes téléphoniques locaux connectés aux joncteurs de lignes intérieures et deux lignes extérieures L1, L2 de réseau, l'appel sur une ligne extérieure sur détection d'une alarme peut être complété par l'envoi par un équipement de surveillance, sur la seconde ligne téléphonique externe, d'images de type semi-fixe complétant la surveillance.

Dans un mode avantageux de réalisation, la fonction de téléalarme peut être activée ou désactivée, au moyen d'un code confidentiel
- localement, par exemple par programmation à partir de l'un quelconque des cinq postes téléphoniques internes, et/ou
- à distance, par l'une des lignes extérieures du réseau commuté,

en utilisant une transmission multifréquence en code Q23.

### FONCTION DE TELESURVEILLANCE

On prendra à titre d'exemple la fonction de télésurveillance d'une alimentation électrique. Il est souvent utile de prévoir une telle fonction de télésurveillance, qui consiste à transmettre, vers un numéro déterminé et/ou par l'intermédiaire du réseau commuté, une alarme en cas d'absence d'alimentation de durée supérieure à un seuil pré-affiché. Elle peut porter sur l'alimentation du terminal lorsqu'il est d'un type qui conserve une capacité de fonctionnement en cas de coupure du réseau électrique d'alimentation, mais uniquement pendant une durée limitée.

La fonction de télésurveillance du secteur peut s'exercer aussi sur une autre alimentation, par exemple celle d'un système dont l'arrêt a des conséquences graves (alimentation d'un congélateur par exemple).

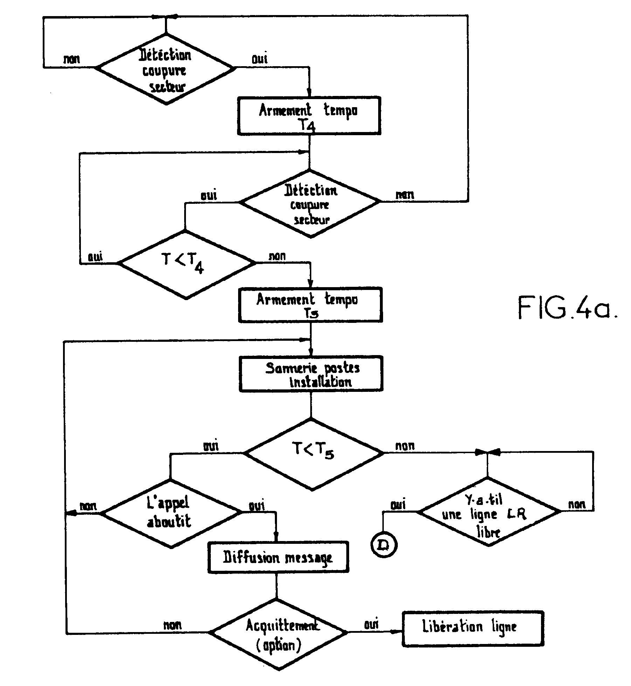

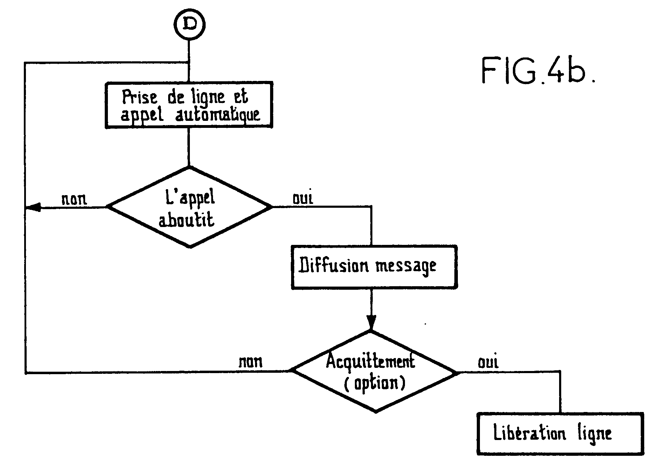

L'organigramme représentatif de cette fonction peut être celui donné en figure 4a et 4b dans le cas où le terminal doit transmettre une information d'alarme, en cas d'absence d'alimentation à partir du secteur alternatif :
- immédiatement, vers un ou plusieurs postes téléphoniques intérieurs,
- vers des numéros préprogrammés du réseau téléphonique commuté, en cas de coupure dépassant une durée programmable.

Dans le cas schématisé, toute détection de coupure du secteur (par le capteur 58 sur la figure 1) provoque l'armement d'une temporisation de durée T4 et une confirmation de détection. Si la détection est confirmée pendant toute la durée de la temporisation T4, l'organigramme continue à se dérouler suivant une séquence comparable à celle de l'organigramme de téléalarme, avec une nouvelle temporisation de durée T5. Un acquittement par le correspondant, permettant de libérer la ligne, sera généralement prévu.

Comme dans le cas précédent, il est avantageux de prévoir une possibilité d'activation ou de désactivation de la fonction télésurveillance du secteur par programmation à partir d'un des postes intérieurs ou par le réseau téléphonique commuté, chaque fois avec un code d'accès confidentiel. Il est également avantageux de prévoir une possibilité de consultation de l'état de marche ou d'arrêt de la fonction.

### FONCTION DE TELECOMMANDE

D'autres organigrammes, similaires à ceux qui viennent d'être décrits, peuvent être prévus pour des fonctions de télécommande, par l'intermédiaire des interfaces 20. Ces télécommandes peuvent par exemple porter sur des contacteurs ou télérupteurs de puissance. Dans ce cas un isolement galvanique doit être réalisé entre la partie courant faible et la partie courant fort, par exemple à l'aide de coupleurs opto-électroniques.

Un circuit spécifique de test donnant une information ou compte rendu peut être prévu sur chacune des fonctions de télécommande.

L'invention est susceptible de nombreuses variantes de réalisation. Mais dans tous les cas elle reste d'une mise en oeuvre particulièrement simple du fait que l'accès à toutes les fonctions s'effectue par simple numérotation manuelle (au clavier ou même au cadran) ou automatique.

## Revendications

1. Terminal de télécommunication et de gestion connectable au réseau téléphonique public, permettant l'utilisation en alternance d'au moins une ligne téléphonique de réseau public pour des communications vocales vers et à partir d'au moins un poste téléphonique local et pour des transferts de données, comportant un autocommutateur électronique ayant au moins une unité de ligne connectable à une ligne de réseau et des joncteurs de lignes intérieures de liaison avec au moins un poste local d'abonné, caractérisé en ce qu'il comprend : des moyens réagissant à tout train d'appel entrant pour décrocher la ligne (LR) et envoyer en retour un message vocal d'interrogation, de durée déterminée ; et des moyens (32,36), pour reconnaître au moins un code d'accès prédéterminé entrant pendant ladite durée déterminée et pour orienter l'appel vers le poste local en provoquant la sonnerie locale en cas d'absence de code d'accès reconnu, vers un autre périphérique de communication en cas de reconnaissance du code d'accès prédéterminé propre au dit autre périphérique.

2. Terminal selon la revendication 1 permettant le télérelevé de compteurs de consommation, caractérisé en ce qu'il comporte un boîtier scellable d'interface avec les compteurs (52) et de mémorisation de leur contenu, mémorisant ou transposant les informations fournies par les compteurs et interdisant toute intervention non autorisée.

3. Terminal selon la revendication 2, caractérisé en ce qu'il comprend des moyens de reconnaissance et d'émission en numérotation multifréquence, dite DTMF.

4. Terminal suivant la revendication 3, caractérisé en ce que la numérotation s'effectue en code Q23.

5. Terminal selon la revendication 2, 3 ou 4, caractérisé en qu'il comprend des moyens de transfert du contenu mémorisé en code Q23 ou par modem.

6. Terminal selon l'une quelconque des revendications précédentes, caractérisé en ce qu'il comporte des moyens qui réagissent à tout appel entrant en : décrochant pour prendre la ligne, émettant la tonalité modem à 2 100 Hz d'excitation d'un système éventuel d'appel automatique ; émettant ultérieurement un message vocal d'une durée suffisante pour permettre la réception d'un code d'accès et sa comparaison avec des codes mémorisés.

7. Terminal selon l'une quelconque des revendications précédentes, comprenant des moyens de mémorisation de codes d'accès répartis en :
- un groupe constitué de codes programmables par l'utilisateurs ;
- un groupe constitué de codes d'accès imposés par des prestataires de service ou des fournisseurs d'accès.

8. Appareil d'appel automatique d'un terminal selon l'une quelconque des revendications précédentes, caractérisé en ce qu'il comprend une unité centrale à micro-ordinateur ; une mémoire d'abonnés organisée en fichier et contenant, pour chaque abonné, un numéro d'appel sur le réseau public et un code d'accès en lecture de compteurs l'un et l'autre en code Q23 ; des moyens de formation et d'envoi du code d'accès réagissant en moins d'une seconde à un signal modem reçu du terminal ; et des moyens de réception de données de comptage en code Q23 d'enregistrement, et de restitution des données relevées.

## Patentansprüche

1. Endgerät zur Fernmeldung und zur Steuerung, das an ein öffentliches Fernsprechnetz anschließbar ist, und die abwechselnde Verwendung von zumindest einer Fernsprechleitung für Sprachferngespräche zu und ausgehend von zumindest einem lokalen Fernsprechgerät und zum Übertragen von Daten erlaubt, mit einer elektronischen automatischen Vermittlungszentrale, die zumindest eine Leitungseinheit hat, die an eine Netzleitung anschließbar ist, und interne Leitungsanpassungsschaltungen zur Verbindung mit zumindest einer lokalen Teilnehmerstelle, dadurch gekennzeichnet, daß das Gerät umfaßt: Mittel, die auf jeden Anrufzug ansprechen, der zum Abnehmen des Hörers der Leitung (LR) und im Gegenzug zum Senden einer Sprachabfragenachricht vorbestimmter Dauer eintrifft, und Mittel (32, 36) zum Erkennen von zumindest einem vorbestimmten Zugriffcode, der während der vorbestimmten Dauer eintrifft, und zum Leiten eines Anrufs zu dem lokalen Anschluß unter Auslösen eines lokalen Läutwerks im Fall der Abwesenheit des Erkennungszugriffcodes zu einem anderen externen Fernmeldeanschluß im Fall der Erkennung des vorbestimmten Zugriffcodes, der zu dem weiteren externen Anschluß gehört.

2. Endgerät nach Anspruch 1, das die Fernabfrage von Verbrauchszählern erlaubt, dadurch gekennzeichnet, daß es ein vergossenes Gehäuse für die Schnittstelle mit den Zählern (52) und für einen Speicher für ihren Inhalt umfaßt, der durch die Zähler gelieferte Informationen speichert oder transponiert und jeglichen nicht-autorisierten Eingriff untersagt.

3. Endgerät nach Anspruch 2, dadurch gekennzeichnet, daß es Mittel zur Erkennung und Aussendung eines Mehrfrequenz-, d.h. DTMF-Wählvorgangs umfaßt.

4. Endgerät nach Anspruch 3, dadurch gekennzeichnet, daß der Wählvorgang mit dem Q23-Code durchgeführt wird.

5. Endgerät nach Anspruch 2, 3 oder 4, dadurch gekennzeichnet, daß es Mittel zur Übertragung des gespeicherten Inhalts im Q23-Code oder durch ein Modem umfaßt.

6. Endgerät nach einem der vorangehenden Ansprüche, dadurch gekennzeichnet, daß es Mittel umfaßt, die auf jeden eingehenden Anruf ansprechen, indem es den Hörer abnimmt, um die Leitung zu übernehmen, indem es den Erregungsmodemton von 2100 Hz eines gegebenenfalls automatischen Anrufsystems aussendet, indem es das spätere Senden einer Sprachnachricht ausreichender Dauer aussendet, um den Empfang des Zugriffcodes und seinen Vergleich mit den abgespeicherten Codes zu erlauben.

7. Endgerät nach einem der vorangehenden Ansprüche, mit Mitteln zum Speichern der Zugriffcodes, die verteilt sind auf:
- Eine Gruppe, die aus durch die Benutzer programmierbaren Codes besteht,
- Eine Gruppe, die aus durch Dienstleistungsanbieter oder Zugrifflieferer vorgegebenen Codes besteht.

8. Vorrichtung zur automatischen Anwahl eines Endgeräts gemäß einem der vorangehenden Ansprüche, dadurch gekennzeichnet, daß es eine Mikrocomputerzentraleinheit umfaßt, einen Teilnehmerspeicher, der in Dateien organisiert ist und für jeden Teilnehmer eine Rufnummer für das öffentliche Netz und einen Zugriffcode zum Lesen der Zähler jeweils in Q23-Code, Mittel zur Bildung und zum Senden des Zugriffcodes, die zumindest auf ein zweites Modemsignal ansprechen, das von dem Endgerät empfangen wird, und Mittel zum Empfang von Aufzeichnungszähldaten im Q23-Code und zum Ersetzen der abgelesenen Daten.

## Claims

1. Telecommunications and management terminal which can be connected to the public telephone network, allowing the alternating use of at least one public network telephone line for voice communications to and from at least one local telephone set and for data transfers, including an electronic automatic exchange having at least one line unit which can be connected to a network line and matching equipment for internal lines for connecting to at least one local subscriber set, characterised in that it comprises: means reacting to any incoming call pulse train to offhook the line (LR) and send back an interrogative voice message, of predetermined duration; and means (32, 36) for recognizing at least one predetermined incoming access code during the said predetermined duration and for directing the call to the local set, whilst activating the local ringer in the absence of a recognized access code, to another communications peripheral if the predetermined access code belonging to the said other peripheral has been recognised.

2. Terminal according to Claim 1, allowing the remote reading of energy consumption meters, characterised in that it includes a sealable case interfacing with the meters (52) and for storing their contents, storing or transposing the information supplied by the meters and preventing any tampering.

3. Terminal according to Claim 2, characterised in that it comprises means for recognition and transmission using multifrequency dialling, known as DTMF.

4. Terminal according to Claim 3, characterised in that dialling is effected in Q23 code.

5. Terminal according to Claim 2, 3 or 4, characterised in that it comprises means for transferring the contents stored in Q23 code or by modem.

6. Terminal according to any one of the preceding claims, characterised in that it includes means which react to any incoming call by: offhooking to seize the line, transmitting the 2100 Hz modem tone for exciting any automatic call system; subsequently transmitting a voice message of sufficient duration to enable an access code to be received and to be compared with stored codes.

7. Terminal according to any one of the preceding claims, comprising means for storing access codes divided into:
- a group consisting of codes which can be programmed by the users;
- a group consisting of access codes fixed by service providers or access providers.

8. Apparatus for the automatic calling of a terminal according to any one of the preceding claims, characterised in that it comprises a central unit with a microcomputer; a subscriber memory organised in files and containing, for each subscriber, a call number on the public network and a meter reading access code, both in Q23 code; means for forming and sending the access code reacting in less than one second to a modem signal received from the terminal; and means for receiving metering data in Q23 code for recording and restoring the data read.
